# EUROPÄISCHE PATENTSCHRIFT

(11) **EP 0 967 065 B1**
(45) Veröffentlichungstag und Bekanntmachung des Hinweises auf die Patenterteilung: **14.05.2003**
(21) Anmeldenummer: 99890202.7
(22) Anmeldetag: 22.06.1999
(51) Int. Cl.: B29C 47/06, B29C 47/28

(54) **Vorrichtung zum Herstellen konzentrischer Schmelzeströme**
Apparatus for producing concentric melt streams
Dispositif pour produire des flux concentriques de matières fondues

(30) Priorität: 23.06.1998 AT 108398
(43) Veröffentlichungstag der Anmeldung: 29.12.1999
(73) Patentinhaber: CINCINNATI MILACRON AUSTRIA, GESELLSCHAFT M.B.H., A-1232 Wien (AT)
(72) Erfinder: Hackl, Leopold, Dipl.-Ing., A-3434 Katzelsdorf am Wienerwald (AT)
(74) Vertreter: Beer, Manfred, Dipl.-Ing.

(56) Entgegenhaltungen:
- EP-A- 0 183 905
- EP-A- 0 252 388
- CA-A- 904 525
- GB-A- 1 603 745

## Beschreibung

Die Erfindung betrifft eine Vorrichtung zum Herstellen konzentrischer Schmelzeströme mit den Merkmalen des einleitenden Teils von Anspruch 1.

Eine Vorrichtung dieser Gattung ist aus der EP 0 252 388 A bekannt. Bei dieser Vorrichtung treffen zusätzliche Schmelzeströme, die einem sich durch einen Ringkanal bewegenden Schmelzestrom zugeführt werden, unter spitzem Winkel auf. Überdies werden die vereinigten Schmelzeströme im Vereinigungsbereich zweimal umgelenkt. Daher liegen in diesem Bereich undefinierte und schwer zu kontrollierende Strömungsverhältnisse vor.

Der Erfindung liegt die Aufgabe zugrunde, eine Vorrichtung der eingangs genannten Gattung zur Verfügung zu stellen, mit der konzentrische Schmelzeströme aus (unterschiedlichem, thermoplastischem) Kunststoff hergestellt werden können, wobei einander kreuzende Strömungswege für die die Deckschichten bildenden und mit einem Extruder erzeugten Schmelzeströme vermieden sind. Dabei soll die erfindungsgemäße Vorrichtung dafür geeignet sein, einen Düsensatz oder ein Profilwerkzeug nicht nur für dreischichtige Rohre bzw. Profile, sondern auch für vier- und mehrschichtige Rohre oder Profile zu beschicken.

Erfindungsgemäß wird diese Aufgabe mit einer Vorrichtung mit den Merkmalen des Anspruches 1 gelöst.

Bevorzugte und vorteilhafte Ausgestaltungen der erfindungsgemäßen Vorrichtung sind Gegenstand der Unteransprüche.

Die erfindungsgemäße Vorrichtung kann als Rohrkopf, der einen Düsensatz oder ein Profilwerkzeug unmittelbar beschickt (also als Rohrkopf dient), oder als Feedblock ausgebildet sein, der einen Düsensatz oder ein Profilwerkzeug über einen Rohrkopf mit Schmelzeströmen beschickt. In der erfindungsgemäßen Vorrichtung sind zur Achse des Düsensatzes oder Profilwerkzeuges etwa senkrecht stehende, ringförmige Kanäle mit zueinander konzentrischen, in Strömungsrichtung der Schmelzeströme offenen, ringförmigen Austrittsöffnungen vorgesehen. Dank dieser Kanäle gelingt es, drei oder mehr konzentrische Schmelzeströme zu erzeugen, ohne daß sich die in einem Extruder erzeugten Schmelzeströme für die Deckschichten in der Vorrichtung kreuzen müssen.

In einer praktischen Ausführungsform kann die erfindungsgemäße Vorrichtung aus Platten zusammengesetzt sein, wobei in den aneinander anliegenden Flächen der Platten, die ringförmigen Kanäle und die ringförmigen Austrittsöffnungen bildende, nutförmige Aussparungen vorgesehen sind.

Bevorzugt wird die Querschnittsfläche der ringförmigen Kanäle von der Stelle, an der sie mit geschmolzenem Kunststoff (Schmelze) beschickt werden, zu der dieser Stelle gegenüberliegenden Stelle hin zunehmend kleiner. Die Form der ringförmigen Kanäle in der erfindungsgemäßen Vorrichtung kann nach von Berechnungsverfahren für Breitschlitzdüsen ("Kleiderbügelverteiler") abgeleiteten Verfahren berechnet werden.

Bei einer Ausführungsform der erfindungsgemäßen Vorrichtung ist vorgesehen, daß der Schmelzestrom, der z.B. die innere Deckschicht eines mehrschichtigen Rohres oder Profils bildet, durch einen in der Vorrichtung koaxial zur Achse des Rohrkopfes oder Profilwerkzeuges ausmündenden Kanal dem Rohrkopf oder dem Düsensatz oder Profilwerkzeug zugeführt wird, wobei die mittlere Schicht und die äußere Deckschicht dem Rohrkopf oder dem Düsensatz oder Profilwerkzeug durch die erfindungsgemäß vorgesehenen, ringförmigen Kanäle und durch deren konzentrische Austrittsöffnungen zugeführt werden.

Es ist in einer Ausführungsform der Erfindung vorgesehen, einem Rohrkopf oder einem Düsensatz oder einem Profilwerkzeug alle Schmelzeströme, z.B. die Schmelzeströme für alle Schichten eines mehrschichtigen Kunststoffrohres, durch ringförmige Kanäle gemäß der Erfindung zuzuführen.

Die erfindungsgemäße Vorrichtung kann nicht nur zum Beschicken eines Düsensatzes zum Herstellen von wenigstens dreischichtigen Rohren, sondern auch zum Beschicken von Profilwerkzeugen mit wenigstens drei kongruenten Schmelzeströmen dienen.

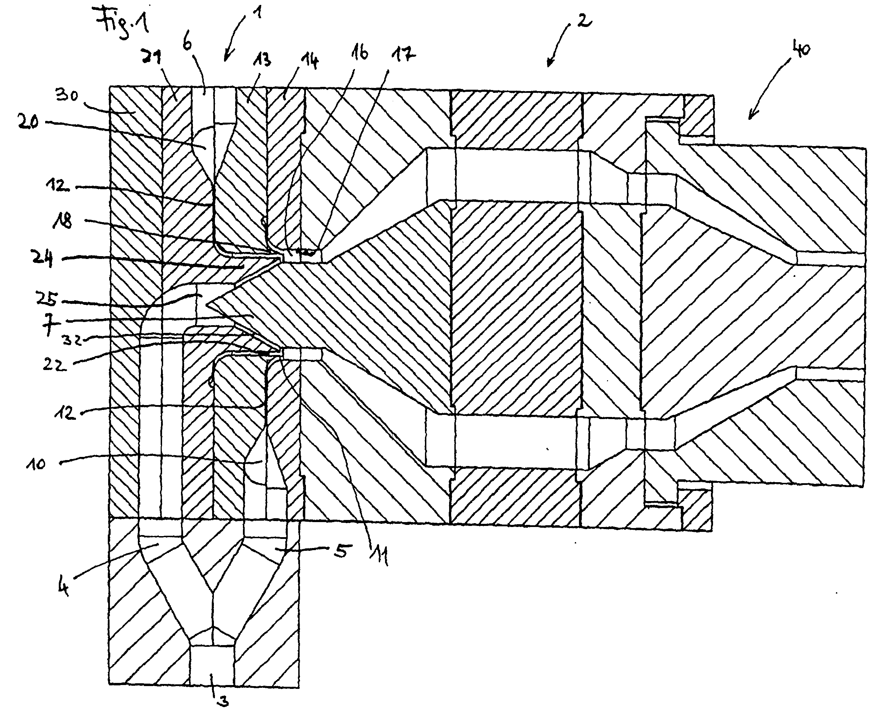

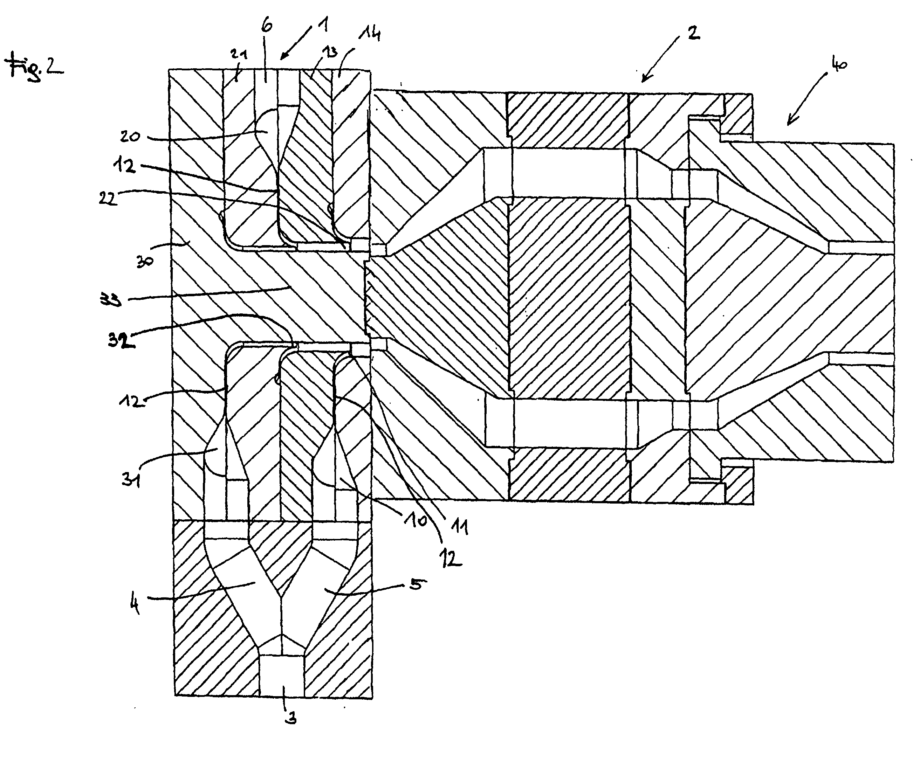

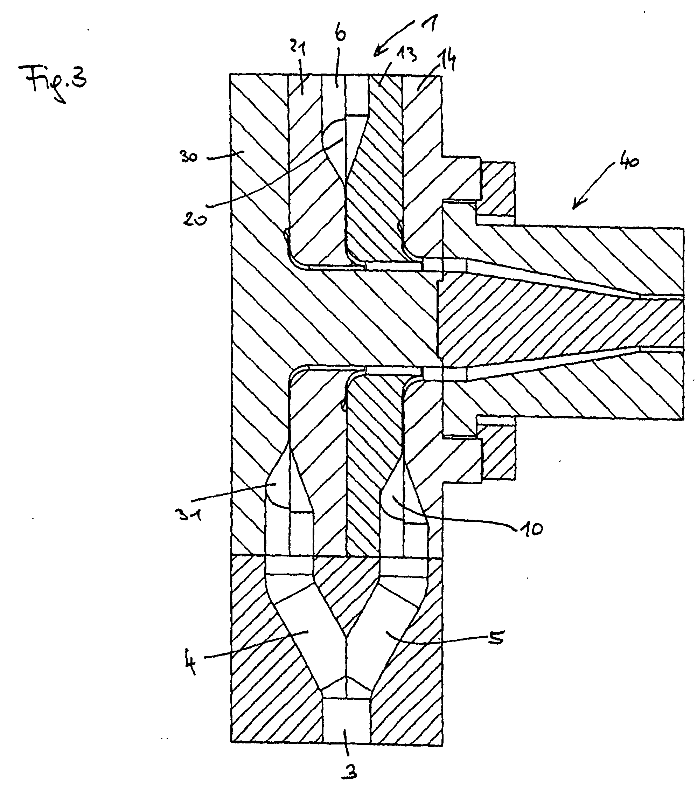

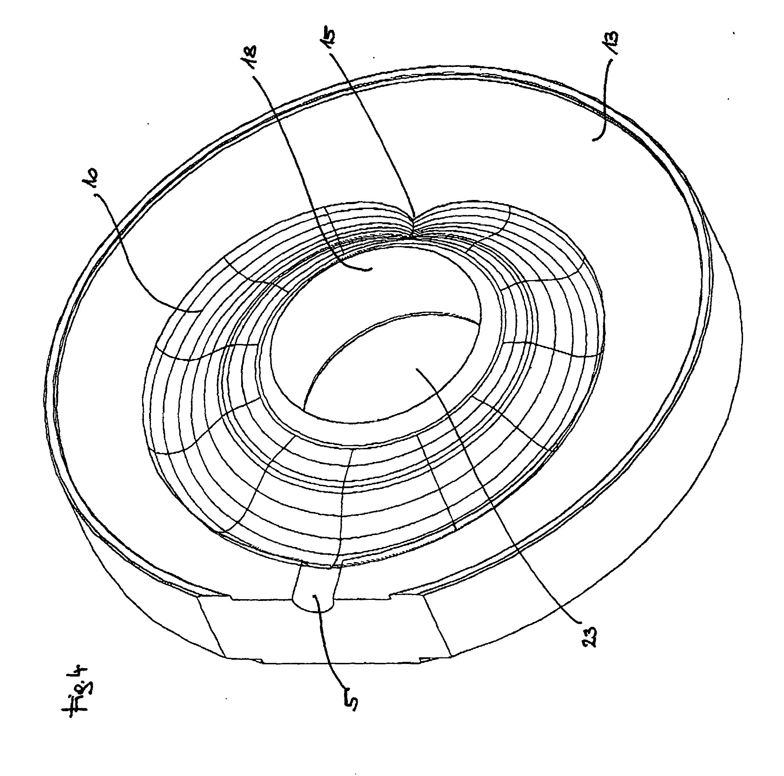

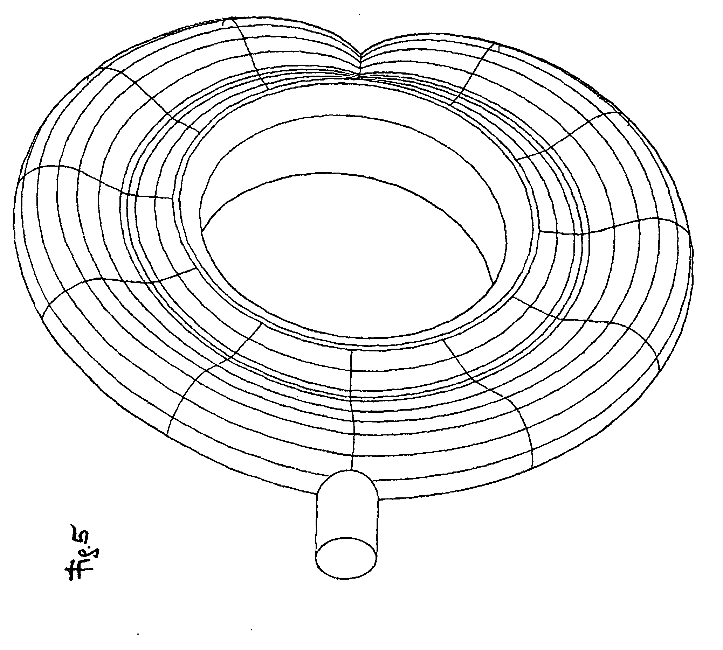

Weitere Einzelheiten und Merkmale der Erfindung ergeben sich aus der nachstehenden Beschreibung von in den Zeichnungen gezeigten Ausführungsbeispielen der Erfindung. Es zeigt: Fig. 1 im Schnitt eine Ausführungsform, bei der die erfindungsgemäße Vorrichtung als Feedblock ausgebildet ist, mit nachgeordnetem Rohrkopf und Düsensatz, Fig. 2 eine andere Ausführungsform einer als Feedblock ausgebildeten, erfindungsgemäßen Vorrichtung mit nachgeordnetem Rohrkopf und Düsensatz, Fig. 3 eine Ausführungsform der erfindungsgemäßen Vorrichtung, die als Rohrkopf ausgebildet ist und einen Düsensatz unmittelbar beaufschlagt, Fig. 4 einen Einzelteil der Vorrichtung von Fig. 3 in Schrägansicht und Fig. 5 in Schrägansicht als Ausbaustück die Gestalt eines Schmelzestromes in einem ringförmigen Kanal einer erfindungsgemäßen Vorrichtung in Schrägansicht.

Eine in Fig. 1 gezeigte Anordnung zum Herstellen von dreischichtigen Rohren durch Koextrusion besitzt eine als Feedblock ausgebildete Vorrichtung 1 gemäß der Erfindung und einen an diesen angeschlossenen Rohrkopf 2, an den seinerseits ein Düsensatz 40 angeschlossen ist.

Von einer Zuführvorrichtung, z.B. von einem Extruder, wird über einen Kanal 3, der sich in zwei Teilkanäle 4 und 5 verzweigt, (schmelz-)flüssiger (thermoplastischer) Kunststoff zugeführt, der die Außenschicht und die Innenschicht (die Deckschichten) eines durch Koextrusion herzustellenden Rohres bildet. Der die Mittelschicht bildende, (schmelz-)flüssige (thermoplastische) Kunststoff wird der Vorrichtung 1, z.B. von einem Extruder, über einen Kanal 6 zugeführt. Die erwähnten Vorrichtungen zum Zuführen von schmelzflüssigen Kunststoffen können beispielsweise Schneckenextruder sein.

Der Teilkanal 4 mündet in der Vorrichtung 1 in Richtung der Achse des Rohrkopfes 2. Der durch diesen Kanal 4 strömende Kunststoff-Strom wird durch einen am Rohrkopf 2 vorgesehenen, in das Ende 25 des Teilkanals 4 ragenden Konus 7 zu einem im Querschnitt ringförmigen Kunststoff-Strom verformt. Dieser ringförmige Kunststoff-Strom bildet in dem im Rohrkopf 2 und im Düsensatz 40 gebildeten Rohr die innerste Schicht (innere Deckschicht).

Der Teilkanal 5 mündet in einen ringförmigen Kanal 10, dessen ringförmige Mündung 11 koaxial zur Achse des Rohrkopfes 2 liegt. In den ringförmigen Kanal 10 geförderter, (schmelz-)flüssiger Kunststoff gelangt über einen Spalt 12 zur Mündung 11. Der ringförmige Kanal 10, die Mündung 11 und der Spalt 12 werden von zwei Platten 13 und 14 begrenzt. Der Kanal 10 wird von zwei Nuten in den Platten 13 und 14 gebildet, die zur Ebene, in der die Platten 13 und 14 aneinander anliegen, hin offen sind.

Aus der Darstellung von Fig. 1 und insbesondere der von Fig. 4 und 5 ist zu entnehmen, daß die Querschnittsfläche des Kanals 10 von der Mündung des Teilkanals 5 weg zu dem dem Teilkanal 5 gegenüberliegenden Bereich des Kanals 10 hin kleiner wird. Dabei wird der Querschnitt des Kanals 10 in seinem der Mündung des Teilkanals 5 gegenüberliegenden Bereich durch einen Vorsprung 15 definiert. Die Form des ringförmigen Kanals 10 entspricht beispielsweise im wesentlichen der Form einer zu einem Ring gebogenen Breitschlitzdüse (Kleiderbügelverteiler).

Die Form des Kunststoff-Stroms im Kanal 10 und im Ende des Teilkanals 5 des Kanals 3 ist in Fig. 5 in Schrägansicht von links der Fig. 1 aus gesehen an einem sogenannten Ausbaustück gezeigt.

Die ringförmige Mündung 11, durch die der über den Teilkanal 5 zugeführte Kunststoff-Strom in den Rohrkopf 2 übertritt, wird außen von der nach innen weisenden Fläche 17 eines Durchgangsloches 16 in der Platte 14 und innen von der Außenfläche eines ringförmigen Vorsprunges 18 an der Platte 13 begrenzt.

Der Ringkanal 20, der über den Kanal 6, z.B. von einem Extruder, mit (schmelz-)flüssigem Kunststoff beschickt wird, besitzt eine dem Kanal 10 entsprechende Form und wird von der Platte 13 und einer weiteren Platte 21 der Vorrichtung 1 begrenzt. Die Mündung 22, zu der Kunststoff-Strom über einen Spalt 12 gelangt und durch die der (schmelz-)flüssige Kunststoff aus dem Kanal 20 austritt - dieser Kunststoff bildet dann die mittlere Schicht des herzustellenden Dreischichtrohres - wird von der Innenfläche eines Loches 23 (Fig. 4) in der Platte 13 und der äußeren Fläche eines Vorsprunges 24 der Platte 21 begrenzt.

Eine zur Achse des Rohrkopfes 2 koaxiale Öffnung in einem Ansatz 24 der Platte 21 bildet das dem Rohrkopf 2 zugekehrte Ende 25 des Teilkanals 4.

Wie die Schnittdarstellung von Fig. 1 und die Schrägansicht von Fig. 4 zeigen, sind die Ringkanäle 10 und 20 zur Achse des Rohrkopfes 2, die gleichzeitig die Mittelachse der Mündungen 11 und 22 ist, nach gegenüberliegenden Seiten exzentrisch, also zueinander versetzt angeordnet.

Wenn mit der in Fig. 1 gezeigten Vorrichtung 1 dem Rohrkopf 2 und dem Düsensatz 40 ein Dreischichtrohr oder mit einem statt des Düsensatzes 40 vorgesehenen Profilwerkzeug ein Dreischicht-Profil herzustellen ist, dessen Deckschichten einerseits und dessen mittlere Schicht anderseits aus verschiedenen Kunststoffen bestehen, dann genügt es die Kanäle 3 und 6 mit unterschiedlichen (geschmolzenen, thermoplastischen) Kunststoffen zu beschicken.

Die in Fig. 1 gezeigte Vorrichtung 1 kann (ebenso wie die Vorrichtungen der Fig. 2 und 3) auch dazu verwendet werden, Kunststoffrohre (oder Profile - dann ist statt des Düsensatzes ein Profilwerkzeug vorgesehen) herzustellen, dessen (drei) Schichten aus drei verschiedenen Kunststoffen bestehen. Es genügt hiezu die Teilkanäle 4 und 5 mit unterschiedlichen Kunststoffen zu beschicken.

Die erfindungsgemäße Vorrichtung kann in allen Ausführungsformen auch dazu verwendet werden, Mehrschichtrohre oder -profile mit einer geschäumten (Mittel-)Schicht zu erzeugen, da es genügt, beispielsweise bei der in Fig. 1 gezeigten Ausführungsform über den Kanal 6 mit einem Treibmittel versetzten Kunststoff zuzuführen.

Die in Fig. 2 gezeigte Ausführungsform mit einer als Verteilkopf (Feedblock) ausgeführten Vorrichtung 1 gemäß der Erfindung und einem mit dieser verbundenen Rohrkopf 2 sowie nach letzterem angeordnetem Düsensatz 40 unterscheidet sich von der in Fig. 1 gezeigten Ausführungsform dadurch, daß der die innerste Schicht (innere Deckschicht) bildende Kunststoff über einen Ringkanal 31 mit der zuvor für die Ringkanäle 10 und 22 beschriebenen Form (schmelz-)flüssig zugeführt wird und in Richtung der Achse des Rohrkopfes 2 aus der Mündung 32 austritt. Die Mündung 32 wird von der Außenfläche eines im wesentlichen zylinderförmigen Ansatzes 33 einer Platte 30, der durch die mittigen Öffnungen in den Platten 21 und 13 bis zum Kern des Rohrkopfes 2 ragt, und von der nach innen weisenden Fläche der mittigen Öffnung in der Platte 21 begrenzt.

Die Vorrichtung 1 der in Fig. 3 gezeigten Ausführungsform entspricht jener von Fig. 2, wobei an die Vorrichtung 1, die hier als Rohrkopf dient, unmittelbar ein Düsensatz 40 angesetzt ist. Diese Ausführungsform (Vorrichtung 1 = Feedblock = Rohrkopf) ist insbesondere für das Herstellen von Rohren oder Profilen mit kleineren, quer zu deren Längserstreckung gemessenen Abmessungen geeignet. Die in Fig. 3 gezeigte Ausführungsform der erfindungsgemäßen Vorrichtung 1 mit drei Ringkanälen 10, 20, 31 kann auch über einen Rohrkopf 2 mit einem Düsensatz oder mit einem Profilwerkzeug verbunden sein.

Es ist ersichtlich, daß bei allen gezeigten Ausführungsbeispielen die Kunststoff-Ströme für die drei Schichten eines durch Koextrusion herzustellenden Mehr-, insbesondere Dreischichtrohres einem Düsensatz oder bei Profilen einem Profilwerkzeug (schmelz-) flüssig zugeführt werden können, ohne daß sich die Strömungsbahnen der Schmelzeströme für die Deckschichten kreuzen, wie dies im Stand der Technik der Fall ist, auch wenn die die innere und die äußere Deckschicht bildenden Kunststoff-Ströme der erfindungsgemäßen Vorrichtung - wie bevorzugt - von einem (einzigen) Extruder zugeführt werden.

Die erfindungsgemäße Vorrichtung 1 kann auch für das Herstellen von Rohren oder Profilen mit mehr als drei Schichten verwendet werden. Es genügt, in der Vorrichtung 1 die entsprechende Anzahl von Ringkanälen vorzusehen, die in zueinander koaxialen Mündungen enden.

Die erfindungsgemäße Vorrichtung kann auch für das Herstellen von nur aus zwei Schichten unterschiedlichen Werkstoffs bestehenden Rohren oder Profilen verwendet werden. Bei dieser Ausführungsform ist in der Vorrichtung entweder ein Ringkanal und ein Kanal ähnlich dem Teilkanal 4 von Fig. 1 vorgesehen, oder es sind in der Vorrichtung 1 zwei Ringkanäle beispielsweise entsprechend den Ringkanälen 10 und 20 von Fig. 1 vorgesehen, um zwei konzentrische oder kongruente Kunststoff-Ströme zu erzeugen.

Allgemein gesagt, sind in der erfindungsgemäßen Vorrichtung für das Herstellen eines Rohres oder Profiles mit n Schichten n-1 Ringkanäle (entsprechend den Ringkanälen 10, 20 oder 31) und ein weiterer koaxial zur Rohrachse ausmündender Kanal (ähnlich dem Teilkanal 4 von Fig. 1) (Ausführungsbeispiel von Fig. 1) oder so viele (also n) Ringkanäle ähnlich den Ringkanälen 10, 20 und 31 vorgesehen, wie das durch Koextrusion herzustellende Rohr oder Profil Schichten aufweisen soll (Ausführungsform von Fig. 3).

Zusammenfassend kann ein Ausführungsbeispiel der Erfindung wie folgt dargestellt werden:

Eine Vorrichtung zum Erzeugen konzentrischer, (schmelz-) flüssiger Kunststoff-Ströme besitzt ringförmige Kanäle 10, 20, 31, die mit Kunststoff-Strömen beaufschlagt werden und deren zueinander konzentrische Austrittsöffnungen 11, 22, 32 quer zur Ebene der ringförmig ausgebildeten Kanäle 10, 20, 31 ausgerichtet sind. Die ringförmigen Kanäle 10, 20, 31 werden durch nutartige Ausnehmungen in aneinander anliegenden Platten gebildet. Mit der Vorrichtung kann ein Rohrkopf 2 mit konzentrischen, (schmelz-)flüssigen Kunststoff-Strömen beschickt werden, wenn mehrschichtige Rohre durch Extrusion hergestellt werden sollen. Von Vorteil ist dabei, daß, auch wenn die Kunststoff-Ströme für die beiden Deckschichten (innerste und äußerste Schicht) des herzustellenden Rohres von einem einzigen Extruder zugeführt werden, einander kreuzende Strömungswege der Kunststoff-Ströme vermieden sind, da es nicht mehr erforderlich ist, den Kunststoff-Strom für die innere Deckschicht durch den Kunststoff-Strom für die mittlere Schicht zu führen, oder umgekehrt.

## Patentansprüche

1. Vorrichtung zum Erzeugen konzentrischer, miteinander vereinigter Schmelzeströme, insbesondere aus thermoplastischem Kunststoff, mit wenigstens zwei ringförmigen Kanälen (10, 20, 31), in denen Kanäle (4, 5, 6) zum Zuführen von Schmelzeströmen münden, wobei die ringförmigen Kanäle (10, 20, 31) mit zueinander konzentrischen Austrittsöffnungen (11, 22, 32) verbunden sind; diese Austrittsöffnungen (11, 22, 32) münden mit ringförmigen Mündungen in einen Ringkanal 16, durch den die nun vereinigten Schmelzeströme strömen, wobei die Mündungen der Austrittsöffnungen (11, 22, 32) in Ebenen liegen, die zu den E-benen der ringförmigen Kanäle (10, 20, 31) parallel sind, **dadurch gekennzeichnet, dass** die ringförmigen Kanäle (10, 20, 31) mit den Austrittsöffnungen (11, 22, 32) über Spalte (12) verbunden sind, dass die Spalte (12) parallel zu den Ebenen der ringförmigen Kanäle (10, 20, 31) ausgerichtet sind, und dass die Austrittsöffnungen (11, 22, 32) parallel zum Ringkanal (16) ausgerichtet sind, derart, dass die Schmelzeströme aus den Mündungen der Austrittsöffnungen (11, 22, 32) in den Ringkanal (16) parallel zur Strömungsrichtung der vereinigten Schmelzeströme durch den Ringkanal (16) eintreten.

2. Vorrichtung nach Anspruch 1, **dadurch gekennzeichnet, dass** so viele ringförmige Kanäle (10, 20, 31) vorgesehen sind, wie zueinander konzentrische Schmelzeströme mit ringförmiger Querschnittsform zu erzeugen sind.

3. Vorrichtung nach Anspruch 1, **dadurch gekennzeichnet, dass** ein zur Achse der ringförmigen Austrittsöffnungen (11, 22) der ringförmigen Kanäle (10, 20) konzentrisch ausmündender Kanal (4, 25) zum Zuführen des innersten Schmelzestromes mit ringförmiger Querschnittsform vorgesehen ist.

4. Vorrichtung nach einem der Ansprüche 1 bis 3, **dadurch gekennzeichnet, dass** die zu den ringförmigen Kanälen (10, 20, 31) führenden Kanäle (4, 5, 6) zu den ringförmigen Kanälen (10, 20, 31) radial angeordnet sind.

5. Vorrichtung nach einem der Ansprüche 1 bis 4, **dadurch gekennzeichnet, dass** die Querschnittsfläche der ringförmigen Kanäle (10, 20, 31) an der Stelle, an der die Kanäle (4, 5, 6) in sie münden, zu der dieser Stelle gegenüberliegenden Stelle kleiner wird.

6. Vorrichtung nach einem der Ansprüche 1 bis 5, **dadurch gekennzeichnet, dass** die ringförmigen Kanäle (10, 20, 31) zu ihren ringförmigen Austrittsöffnungen (11, 22, 31) exzentrisch angeordnet sind.

7. Vorrichtung nach Anspruch 6, **dadurch gekennzeichnet, dass** benachbarte, ringförmige Kanäle (10, 20, 32) zu ihren ringförmigen Austrittsöffnungen (11, 22, 31) nach gegenüberliegenden Seiten hin versetzt angeordnet sind.

8. Vorrichtung nach einem der Ansprüche 1 bis 9, **dadurch gekennzeichnet, dass** die ringförmigen Kanäle (10, 20, 31) durch aufeinander zu offene Nuten in aneinander anliegenden Platten (13, 14, 21, 30) gebildet sind.

9. Vorrichtung nach Anspruch 8, **dadurch gekennzeichnet, dass** die ringförmigen Austrittsöffnungen (11, 22, 31) von der Innenfläche (17) eines Loches (16) in einer Platte (14) und von der Außenfläche eines Ansatzes (18, 24, 33) an einer weiteren Platte (13) begrenzt sind.

10. Vorrichtung nach einem der Ansprüche 1 bis 9, **dadurch gekennzeichnet, dass** der ringförmige Kanal (10), der mit Schmelze für den radial äußersten Schmelzestrom mit ringförmiger Querschnittsform beaufschlagt ist, und der ringförmige Kanal (31), der mit Kunststoff für den radial innersten Kunststoff-Strom mit ringförmiger Querschnittsform beaufschlagt ist, mit einem einzigen Extruder verbunden sind.

11. Vorrichtung nach einem der Ansprüche 1 bis 9, **dadurch gekennzeichnet, dass** der ringförmige Kanal (10), der mit Kunststoff zum Ausbilden des radial äußersten Schmelzestromes mit ringförmiger Querschnittsform beaufschlagt ist, und der Kanal (4, 25), der mit Kunststoff zum Ausbilden des radial innersten Schmelzestromes mit ringförmiger Querschnittsform beaufschlagt ist, mit einem einzigen Extruder verbunden sind.

12. Vorrichtung nach Anspruch 3 bis 9 und 11, **dadurch gekennzeichnet, dass** in die abgabeseitige Mündung (25) des Kanals (4) ein Konus (7) eingreift und daß die ringförmige Austrittsöffnung (32) durch die Außenfläche des Konus (7) und die Innenfläche des Endabschnittes (25) des Kanals (4) begrenzt ist.

13. Vorrichtung nach einem der Ansprüche 1 bis 12, **dadurch gekennzeichnet, dass** die Vorrichtung (1) unter Zwischenschaltung eines Rohrkopfes (2) mit einem Düsensatz (40) oder einem Profilwerkzeug verbunden ist.

14. Vorrichtung nach einem der Ansprüche 1 bis 12, **dadurch gekennzeichnet, dass** die Vorrichtung (1) unmittelbar mit einem Düsensatz (40) oder einem Profilwerkzeug verbunden ist.

15. Vorrichtung nach einem der Ansprüche 1 bis 14, **dadurch gekennzeichnet, dass** die Stelle der ringförmigen Kanäle (10, 20, 31) mit kleinster Querschnittsfläche von einem radial nach innen weisenden Vorsprung (15) gebildet ist.

## Claims

1. Device for producing concentric, mutually combined melt streams, in particular made of thermoplastic, plastic material, having at least two annular channels (10, 20, 31), in which channels (4, 5, 6) for supplying melt streams discharge, the annular channels (10, 20, 31) being connected to mutually concentric discharge openings (11, 22, 32); these discharge openings (11, 22, 32) discharge with annular outlets into a ring channel (16), through which the now combined melt streams flow, the outlets of the discharge openings (11, 22, 32) lying in planes which are parallel to the planes of the annular channels (10, 20, 31), **characterised in that** the annular channels (10, 20, 31) are connected to the discharge openings (11, 22, 32) via gaps (12), **in that** the gaps (12) are aligned parallel to the planes of the annular channels (10, 20, 31), and **in that** the discharge openings (11, 22, 32) are aligned parallel to the ring channel (16) in such a manner that the melt streams from the outlets of the discharge openings (11, 22, 32) enter into the ring channel (16) parallel to the direction of flow of the combined melt streams through the ring channel (16).

2. Device according to claim 1, **characterised in that** the number of annular channels (10, 20, 31) provided is in accordance with the mutually concentric melt streams to be produced with an annular cross-sectional form.

3. Device according to claim 1, **characterised in that** the channel (4, 25) which discharges concentrically to the axis of the annular discharge openings (11, 22) of the annular channels (10, 20) is provided for supplying the innermost melt stream with an annular cross-sectional form.

4. Device according to one of the claims 1 to 3, **characterised in that** the channels (4, 5, 6), which lead to the annular channels (10, 20, 31), are disposed radially to the annular channels (10, 20, 31).

5. Device according to one of the claims 1 to 4, **characterised in that** the cross-sectional area of the annular channels (10, 20, 31) at the point at which the channels (4, 5, 6) discharge into it, become smaller towards the point situated opposite this point.

6. Device according to one of the claims 1 to 5, **characterised in that** the annular channels (10, 20, 31) to their annular discharge openings (11, 22, 31) are disposed eccentrically.

7. Device according to claim 6, **characterised in that** adjacent, annular channels (10, 20, 32) to their annular discharge openings (11, 22, 31) are disposed offset to oppositely-situated sides.

8. Device according to one of the claims 1 to 9, **characterised in that** the annular channels (10, 20, 31) are formed by grooves, which are open towards each other, in plates (13, 14, 21, 30) which abut against each other.

9. Device according to claim 8, **characterised in that** the annular discharge openings (11, 22, 31) are delimited by the internal face (17) of a hole (16) in one plate (14) and by the external face of an extension (18, 24, 33) on a further plate (13).

10. Device according to one of the claims 1 to 9, **characterised in that** the annular channel (10), which is supplied with melt for the radially outermost melt stream with an annular cross-sectional form, and the annular channel (31), which is supplied with plastic material for the radially innermost plastic material stream with an annular cross-sectional form, are connected to a single extruder.

11. Device according to one of the claims 1 to 9, **characterised in that** the annular channel (10), which is supplied with plastic material for configuring the radially outermost melt stream with an annular cross-sectional form, and the channel (4, 25), which is supplied with plastic material for configuring the radially innermost melt stream with an annular cross-sectional form, are connected to a single extruder.

12. Device according to claims 3 to 9 and 11, **characterised in that** a cone (7) engages in the output-side outlet (25) of the channel (4) and **in that** the annular discharge opening (32) is delimited by the external face of the cone (7) and the internal face of the end portion (25) of the channel (4).

13. Device according to one of the claims 1 to 12, **characterised in that** the device (1) is connected to a nozzle assembly or to a profiling tool by insertion of a pipe bead (2).

14. Device according to one of the claims 1 to 12, **characterised in that** the device (1) is connected directly to a nozzle assembly (40) or to a profiling tool.

15. Device according to one of the claims 1 to 14, **characterised in that** the point of the annular channels (10, 20, 31) with the smallest cross-sectional area is formed by a radially, inwardly pointing projection (15).

## Revendications

1. Dispositif pour produire des flux concentriques, réunis, de masse fondue, en particulier de matière thermoplastique, comportant au moins deux canaux (10, 20, 31) annulaires dans lesquels débouchent des canaux (4, 5, 6) d'amenée pour les flux de masse fondue, les canaux annulaires (10, 20, 31) communiquant avec des orifices de sortie (11, 22, 32) mutuellement concentriques, les orifices de sortie (11, 22, 32) débouchant avec des embouchures circulaires dans un canal annulaire (16) dans lequel s'écoulent les flux de masse fondue réunis, les embouchures des orifices de sortie (11, 22, 32) étant situées dans des plans parallèles aux plans des canaux annulaires (10, 20, 31), **caractérisé en ce que** les canaux annulaires (10, 20, 31) communiquent avec les orifices de sortie (11, 22, 32) par des fentes (12), **en ce que** les fentes (12) sont orientées parallèlement aux plans des canaux annulaires (10, 20, 31) et **en ce que** les orifices de sortie (11, 22, 32) sont orientés parallèlement au canal annulaire (16) de telle sorte que les flux de masse fondue sortant des orifices de sortie (11, 22, 32) entrent dans le canal annulaire (16) parallèlement à la direction d'écoulement des flux de masse fondue réunis.

2. Dispositif selon la revendication 1, **caractérisé en ce qu'**il est prévu autant de canaux annulaires (10, 20, 31) que de flux de masse fondue mutuellement concentriques, à section annulaire, à produire.

3. Dispositif selon la revendication 1, **caractérisé en ce qu'**il est prévu un canal (4, 25), qui débouche concentriquement à l'axe des orifices de sortie (11, 22) annulaires des canaux annulaires (10, 20), pour amener le flux de masse fondue le plus à l'intérieur avec une section annulaire.

4. Dispositif selon une des revendications 1 à 3, **caractérisé en ce que** les canaux (4, 5, 6) menant aux canaux annulaires (10, 20, 31) sont disposés radialement par rapport aux canaux annulaires (10, 20, 31).

5. Dispositif selon une des revendications 1 à 4, **caractérisé en ce que** la surface en section transversale des canaux annulaires (10, 20, 31) au point où les canaux (4, 5, 6) débouchent dans ceux-ci diminue en direction du point opposé au premier.

6. Dispositif selon une des revendications 1 à 5, **caractérisé en ce que** les canaux annulaires (10, 20, 31) sont excentrés par rapport à leurs orifices de sortie (11, 22, 32) annulaires.

7. Dispositif selon la revendication 6, **caractérisé en ce que** des canaux annulaires (10, 20, 31) voisins, au niveau de leurs orifices de sortie (11, 22, 32), sont décalés en direction de faces opposées

8. Dispositif selon une des revendications 1 à 7, **caractérisé en ce que** les canaux annulaires (10, 20, 31) sont formés par des rainures ouvertes en direction l'une de l'autre, aménagées dans des plaques (13, 14, 21, 30) appliquées l'une contre l'autre.

9. Dispositif selon la revendication 8, **caractérisé en ce que** les orifices de sortie (11, 22, 32) annulaires sont délimités par la surface intérieure (17) d'un trou (16) aménagé dans une plaque (14) et par la surface extérieure d'une embase (18, 24, 33) prévue sur une plaque (13) supplémentaire.

10. Dispositif selon une des revendications 1 à 9, **caractérisé en ce que** le canal annulaire (10) qui est alimenté en masse fondue pour former le flux de masse fondue à section annulaire radialement le plus extérieur et le canal annulaire (31) qui est alimenté en matière plastique pour former le flux de matière plastique à section annulaire radialement le plus intérieur sont reliés à une extrudeuse unique.

11. Dispositif selon une des revendications 1 à 9, **caractérisé en ce que** le canal annulaire (10) qui est alimenté en matière plastique pour former le flux de masse fondue à section annulaire radialement le plus extérieur et le canal (4, 25) qui est alimenté en matière plastique pour former le flux de matière plastique à section annulaire radialement le plus intérieur sont reliés à une extrudeuse unique.

12. Dispositif selon une des revendications 3 à 9 et 11, **caractérisé en ce que** l'embouchure (25) côté sortie du canal (4) entoure un cône (7) et **en ce que** l'orifice de sortie (32) annulaire est délimité par la surface extérieure du cône (7) et la surface intérieure du tronçon terminal (25) du canal (4).

13. Dispositif selon une des revendications 1 à 12, **caractérisé en ce que** le dispositif (1) est connecté à un jeu de filières (40) ou à un outil à profiler par l'intermédiaire d'une tête de tube (2).

14. Dispositif selon une des revendications 1 à 12, **caractérisé en ce que** le dispositif (1) est connecté directement à un jeu de filières (40) ou à un outil à profiler.

15. Dispositif selon une des revendications 1 à 14, **caractérisé en ce que** le point des canaux annulaires (10, 20, 31) présentant la plus faible section et formé par une saillie qui s'avance radialement vers l'intérieur.
